# EUROPÄISCHE PATENTSCHRIFT

(11) **EP 3 562 616 B1**
(45) Veröffentlichungstag und Bekanntmachung des Hinweises auf die Patenterteilung: **09.11.2022**
(21) Anmeldenummer: 18829238.7
(22) Anmeldetag: 11.12.2018
(51) Int. Cl.: B23K 26/70, B23K 26/046

(54) **VERFAHREN UND VORRICHTUNG ZUR ÜBERWACHUNG EINER STRAHLFÜHRUNGSOPTIK IN EINEM LASERBEARBEITUNGSKOPF BEI DER LASERMATERIALBEARBEITUNG**
METHODS AND DEVICE FOR MONITORING A BEAM GUIDING OPTICAL UNIT IN A LASER PROCESSING HEAD DURING LASER MATERIAL PROCESSING
PROCÉDÉ ET DISPOSITIF DE SURVEILLANCE D'UNE OPTIQUE DE GUIDAGE DE FAISCEAU DANS UNE TÊTE D'USINAGE AU LASER LORS DE L'USINAGE DE MATÉRIAUX AU LASER

(30) Priorität: 22.12.2017 DE 102017131147
(43) Veröffentlichungstag der Anmeldung: 06.11.2019
(73) Patentinhaber: Precitec GmbH & Co. KG, 76571 Gaggenau-Bad Rotenfels (DE)
(72) Erfinder: BLÁZQUEZ-SÁNCHEZ, David, 76571 Gaggenau (DE); WECKENMANN, Niklas, 76437 Rastatt (DE)
(74) Vertreter: Ter Meer Steinmeister & Partner
(86) Internationale Anmeldenummer: PCT/EP2018/084308
(87) Internationale Veröffentlichungsnummer: WO 2019/121146

(56) Entgegenhaltungen:
- DE-A1-102004 006 565
- DE-A1-102011 007 176
- DE-U1- 9 403 822
- DE-U1- 20 206 255
- DE-U1- 29 816 879

## Beschreibung

Die Erfindung betrifft ein Verfahren und eine Vorrichtung zur Überwachung einer Strahlführungsoptik in einem Laserbearbeitungskopf und zur Regelung der Fokuslage bei der Lasermaterialbearbeitung.

Ein Problem bei der Lasermaterialbearbeitung ist die sogenannte "thermische Linse", die auf die Erwärmung von optischen Elementen zur Laserstrahlführung und -fokussierung durch die Laserleistung, insbesondere im Multi-Kilowatt-Bereich und auf die Temperaturabhängigkeit der Brechzahl optischer Gläser zurückzuführen ist. Die thermische Linse führt bei der Lasermaterialbearbeitung zu einer Fokusverschiebung entlang der Strahlausbreitungsrichtung.

Während des Lasermaterialbearbeitungsprozesses treten in erster Linie zwei Mechanismen auf, die zu einer Erwärmung der optischen Elemente führen. Ursächlich hierfür sind zum einen eine Erhöhung der Laserleistung und zum anderen eine Verschmutzung der optischen Elemente. Weiterhin ist es möglich, dass die optischen Elemente eine mechanische Deformation erfahren, die zu einer Änderung der Brennkraft führt. Die mechanische Deformation kann beispielsweise durch eine thermische Ausdehnung der Fassung der optischen Elemente hervorgerufen werden. Um eine qualitativ hochwertige Laserbearbeitung sicher zu stellen, ist es erforderlich die jeweilige Fokuslage zu erfassen und die Fokuslagenverschiebung auszugleichen, also eine schnelle und genaue Fokuslagenregelung bereitzustellen.

Die DE 10 2011 007 176 A1 (Basis für den Oberbegriff der Ansprüche 1 und 5) beschreibt eine Vorrichtung zur Fokussierung eines Laserstrahls auf ein Werkstück, die mindestens ein transmissives optisches Element, das bezüglich einer Ebene senkrecht zur Strahlachse des Laserstrahls unter einem Kippwinkel angeordnet ist, und einen ortsauflösenden Detektor zur Erfassung von an dem transmissiven optischen Element rückreflektierter Laserstrahlung umfasst. Aus dem vom Detektor, z.B. einem CCD-Chip erfassten Bild wird von einer Bildauswerteeinrichtung die Größe oder der Durchmesser der rückreflektierten Laserstrahlung auf dem Detektor ermittelt, aus der bzw. dem wiederum zur Fokuslagenregelung die Fokusposition bestimmt werden kann.

Die DE 10 2013 021 151 B3 betrifft ein Verfahren zur zumindest teilweisen Kompensation einer thermischen Linse in einer optischen Anordnung. Die optische Anordnung weist ein oder mehrere optische Elemente auf, in denen sich eine thermische Linse ausbildet. Im Strahlengang des Laserstrahls ist eine optische Kompensationsanordnung mit wenigstens einem optischen Kompensationselement angeordnet, das in einem Durchtrittsbereich der Laserstrahlung eine gegenüber wenigstens einem der optischen Elemente umgekehrte Änderung des Brechungsindex mit der Temperatur aufweist. Der Durchmesser des Kompensationselementes ist dabei so gewählt, dass seine thermische Zeitkonstante im Durchtrittsbereich der des wenigstens einen optischen Elementes möglichst nahe kommt. Mit dem Verfahren und der daraus resultierenden optischen Anordnung lassen sich auch transiente Effekte bei Ausbildung einer thermischen Linse auf einfache Weise zumindest annähernd kompensieren. Eine durch Verschmutzung bedingte thermische Linse kann hierdurch nicht kompensiert werden.

Die DE 10 2007 039 878 A1 beschreibt eine Vorrichtung und ein Verfahren zur Stabilisierung der Fokuslage bei Optiken für Hochleistungs-Laserstrahlung zur Lasermaterialbearbeitung, bei denen der Fokus mittels beweglicher optischer Elemente und einer Steuerung bei Auftreten einer laserstrahlinduzierten Fokuslagenänderung in entgegengesetzter Richtung verschoben wird, so dass der Fokus in Summe in der Soll-Lage verbleibt. Die für die Korrektur erforderliche Information kann über die momentane Leistung des Laserstrahls berechnet werden. Um diese zu messen, kann im Strahlengang der Optik eine planparallele Platte unter einem Winkel zur optischen Achse angeordnet werden, an der ein kleiner konstanter Bruchteil des Laserstrahls auf einen optischen Sensor umgelenkt wird. Auch hier ist eine Kompensation einer durch Verschmutzung bedingten thermischen Linse nicht möglich.

Die DE 10 2011 054 941 B3 betrifft eine Vorrichtung zur Korrektur der thermischen Verschiebung der Fokuslage. Die Vorrichtung ist mit einem Sensor zur Ermittlung der aktuellen Fokuslage der Laserstrahlen, einer Recheneinheit zum Vergleichen der aktuellen Fokuslage mit einer, in einem Speicher abgelegten Soll-Fokuslage und zum Ableiten von Korrekturdaten aus dem Vergleich von aktueller und Soll-Fokuslage und einer Korrektureinheit mit wenigstens einem veränderbaren optischen Element, zum Verändern der Fokuslage gemäß der Korrekturdaten ausgestattet. Hier ist der Sensor am Ort des Fokus eines Rückreflexes der Laserstrahlung angeordnet, die von einer der Flächen eines der letzten optischen Elemente in Strahlrichtung vor dem zu bearbeitenden Material reflektiert wird.

Beim aktuellen Stand der Technik kann zwar auch bei einem hohen Verschmutzungsgrad eine Fokuslagenüberwachung zur Fokuslagenkompensation durchgeführt werden, jedoch besteht die Gefahr, dass die verschmutze Optik vollständig zerstört wird, da eine Verschmutzung nicht erkannt wird.

Die DE 101 13 518 B4 betrifft ein Verfahren zur Messung des Verschmutzungsgrades eines Schutzglases, das in einem Laserbearbeitungskopf strahlausgangsseitig zu einer im Laserbearbeitungskopf vorhandenen Linsenanordnung liegt, durch die ein Laserstrahl hindurchtritt. Hierzu ist außerhalb des Laserstrahls eine erste Strahlungsdetektoranordnung angeordnet, die eine vom Laserstrahl durchsetzte Fläche des Schutzglases beobachtet, um die Intensität der von dort kommenden Streustrahlung zu messen, die durch Streuung des Laserstrahls an Partikeln hervorgerufen wird, die am Schutzglas haften. Eine zweite Strahlungsdetektoranordnung misst zur Erfassung der Laserleistung die Intensität eines aus dem Laserstrahl umgelenkten Teilstrahls. Aus dem Verhältnis von Streustrahlung zu Laserleistung kann dann auf den Verschmutzungsgrad der beobachteten Fläche des Schutzglases geschlossen werden. Eine Fokuslagenkompensation ist hier nicht vorgesehen.

DE 10 2011 007 176 A1 offenbart eine Vorrichtung und ein Verfahren zum Überwachen einer Laserbearbeitung.

DE 94 03 822 U1 offenbart eine Überwachungsvorrichtung für Laserstrahlung zur Werkstückbearbeitung.

DE 298 16 879 U1 offenbart eine Laserbearbeitungsmaschine.

Davon ausgehend liegt der Erfindung die Aufgabe zugrunde, ein Verfahren und eine Vorrichtung bereitzustellen, die eine Echtzeit-Regelung der Fokuslage bei der Lasermaterialbearbeitung bei gleichzeitiger Maximierung der Standzeit der Optik ermöglicht.

Diese Aufgabe wird durch das Verfahren nach Patentanspruch 1 und die Vorrichtung nach Patentanspruch 5 gelöst. Vorteilhafte Ausgestaltungen und Weiterbildungen der Erfindung sind in den jeweiligen Unteransprüchen beschrieben.

Erfindungsgemäß wird also zur Überwachung einer Strahlführungsoptik in einem Laserbearbeitungskopf bei der Lasermaterialbearbeitung ein physikalischer Parameter von wenigstens einem optischen Element der Strahlführungsoptik, der mit dem Verschmutzungsgrad des optischen Elements korreliert, während der Lasermaterialbearbeitung gemessen und die Fokusposition zur Fokuslagenregelung erfasst. Eine gemessene Fokuslagenänderung wird dann solange kompensiert, wie der gemessene Wert des physikalischen Parameters des optischen Elements der Strahlführungsoptik einen zugeordneten kritischen Wert noch nicht erreicht hat. Wenn jedoch der gemessene Wert des physikalischen Parameters des zumindest einen optischen Elements der Strahlführungsoptik den zugeordneten kritischen Wert erreicht, wird ein Fehlersignal ausgegeben. Hierdurch wird die gleichzeitige Erkennung der Fokuslagenverschiebung, im Folgenden auch Fokusshift genannt, und der Verschmutzungsgrad der optischen Elemente ermöglicht, um einerseits durch die Fokuslagenkorrektur eine hohe Bearbeitungsqualität sicher zu stellen und andererseits eine Beschädigung der Strahlführungsoptik durch übermäßige Erwärmung aufgrund von Verschmutzungen zu verhindern.

Erfindungsgemäß ist vorgesehen, dass der zu messende physikalische Parameter des oder der optischen Elemente der Strahlführungsoptik deren Temperatur ist.

Erfindungsgemäß ist außerdem vorgesehen, dass die Temperatur von wenigstens zwei optischen Elementen der Strahlführungsoptik gemessen wird und dass die gemessenen Temperaturwerte der einzelnen optischen Elemente der Strahlführungsoptik ferner mit einander verglichen werden, um eine Verschmutzung eines optischen Elements durch einen gegenüber den Temperaturanstiegen der anderen optischen Element markanten Temperaturanstieg zu erkennen.

Da sowohl ein großer Anstieg in der Laserleistung als auch ein hoher Verschmutzungsgrad der Strahlführungsoptik, zu einer Fokuslagenverschiebung führt, ist es zweckmäßig, wenn die Leistung eines Bearbeitungslaserstrahls gemessen und ein daraus ermittelter Leistungsverlauf mit dem Temperaturverlauf des zumindest einen optischen Elements verglichen wird, um einen verschmutzungsbedingten Fokusshift zu erkennen und gegebenenfalls die Laserbearbeitung zu Wartungszwecken zu unterbrechen.

Gemäß einer weiteren Ausgestaltung der Erfindung ist vorgesehen, dass der physikalische Parameter des zumindest einen optischen Elements das von diesem ausgehende Streulicht ist. Dabei wird die Streulichtmessung in Kombination mit einer Temperaturmessung eingesetzt . Durch die Kombination der Erfassung von zwei Parametern lässt sich die Zuverlässigkeit der Verschmutzungserkennung verbessern.

Zweckmäßiger Weise wird auch die Leistung eines Bearbeitungslaserstrahls gemessen und ein Leistungsmesswert mit einem Streulichtmesswert des zumindest einen optischen Elements ins Verhältnis gesetzt wird, um eine Verschmutzung zu erkennen.

Bei einer anderen vorteilhaften Ausgestaltung der Erfindung ist vorgesehen, dass zur Erfassung der Fokusposition ein Rückreflex von einem im zum Fokus hin konvergierenden Bearbeitungslaserstrahl angeordneten optischen Element aus dem Bearbeitungslaserstrahlengang ausgekoppelt wird, um zumindest einen Strahldurchmesser im Bereich des Fokus zu vermessen und um aus dem oder den Strahldurchmessern die Fokusposition zu bestimmen.

Dabei ist es zweckmäßig, wenn aus zumindest zwei gemessenen Strahldurchmessern eine Strahlkaustik im Fokusbereich ermittelt wird, um aus der ermittelten Strahlkaustik die Fokusposition zu bestimmen. Hierdurch wird eine direkte Echtzeit- oder Inline-Strahlkaustikvermessung ermöglich, um während des Laserbearbeitungsprozesses eine präzise Ermittlung Fokuslage in Echtzeit sicher zu stellen.

Ferner ist erfindungsgemäß eine Vorrichtung zur Überwachung einer Strahlführungsoptik in einem Laserbearbeitungskopf bei der Lasermaterialbearbeitung vorgesehen, die zumindest einen Sensor zum Messen eines physikalischen Parameters von zumindest einem optischen Element der Strahlführungsoptik, der mit dem Verschmutzungsgrad des optischen Elements korreliert, während der Lasermaterialbearbeitung und einen ortsauflösenden Sensor zur Vermessung des Strahldurchmesser im Bereich des Fokus zur Erfassung der aktuellen Fokusposition aufweist. Eine Auswerteschaltung, der ein Ausgangssignal des ortsauflösenden Sensors zuführbar ist, bestimmt aus dem Ausgangssignal des ortsauflösenden Sensors die aktuelle Fokusposition zu und gibt ein Stellsignal für einen Stellantrieb aus, der daraufhin zumindest ein optisches Element der Strahlführungsoptik zur Fokuslagenregelung verschiebt. Eine Überwachungsschaltung vergleicht den oder die gemessenen Werte des Parameters des oder der optischen Elemente der Strahlführungsoptik mit einem zugeordneten kritischen Wert und gibt ein Fehlersignal aus, wenn ein Wert des gemessenen Parameters des oder der optischen Elemente der Strahlführungsoptik den zugeordneten kritischen Wert erreicht. Somit kann eine Beschädigung der Strahlführungsoptik wegen übermäßiger Erwärmung aufgrund von Verschmutzung ausgeschlossen werden.

Nach der Erfindung ist der physikalische Wert des zumindest einen optischen Elements dessen Temperatur. Somit wird als Sensor ein Temperatursensor zum Messen der Temperatur einzelner optischer Elemente der Strahlführungsoptik vorgesehen, der als Thermofühler, Thermoelement oder berührungslos messender Temperatursensor wie Strahlungsthermometer, Thermopile oder dergleichen ausgebildet sein kann.

Zur zuverlässigen Unterscheidung zwischen den verschiedenen Ursachen für eine thermische Linse ist vorgesehen, dass die Temperaturüberwachungsschaltung ferner eingerichtet ist die gemessenen Temperaturwerte von zumindest zwei optischen Elementen der Strahlführungsoptik mit einander zu vergleichen, um eine Verschmutzung eines optischen Elements durch einen gegenüber den Temperaturanstiegen der anderen optischen Element markanten Temperaturanstieg zu erkennen.

Eine weitere Ausgestaltung der Erfindung sieht vor, dass zur Messung der Leistung eines Bearbeitungslaserstrahls ein Leistungssensor vorgesehen ist, und dass die Temperaturüberwachungsschaltung ferner eingerichtet ist, einen aus der gemessenen Leistung ermittelten Leistungsverlauf mit einem Temperaturverlauf des zumindest einen optischen Elements zu vergleichen, um eine Verschmutzung zu erkennen und die dadurch initiierte thermische Linse von einer thermischen Linse aufgrund erhöhter Laserleistung zu unterscheiden. Die Leistungsmessung ermöglicht nicht nur eine Doppelkontrolle des Temperaturverlaufs, sondern auch eine Doppelkontrolle der Fokuslage. Für den Fall, dass alle Optiken "sauber" sind, kann man Soll-Werte für die Fokuslage in Abhängigkeit von der Laserleistung ermitteln. Bei einer bestimmten Laserleistung geben Abweichungen von den Soll-Temperaturwerten und von der Soll-Fokuslage einen Hinweis auf Verschmutzungsprobleme.

Bei einer anderen Ausgestaltung der erfindungsgemäßen Vorrichtung ist vorgesehen, dass der zumindest eine Sensor zum Messen eines physikalischen Parameters des zumindest einen optischen Elements ein Streulichtsensor ist. Ist dabei gleichzeitig zur Messung der Leistung des Bearbeitungslaserstrahls ein Leistungssensor vorgesehen ist, so ist es möglich, dass eine entsprechend eingerichtete Überwachungsschaltung (50) einen Leistungsmesswert mit einem Streulichtmesswert des zumindest einen optischen Elements ins Verhältnis setzen kann, um eine Verschmutzung sicher zu erkennen.

Der Sensor zur Vermessung des Bearbeitungslaserstrahls ist vorteilhafter Weise ein ortsauflösender Sensor.

Eine zweckmäßige Ausgestaltung der Erfindung zeichnet sich dadurch aus, dass ein im zum Fokus hin konvergierenden Bearbeitungslaserstrahl angeordnetes optisches Element, insbesondere das letzte optische Element der Stahlführungsoptik so gegen die optische Achse des Bearbeitungslaserstrahlengangs geneigt ist, dass ein Rückreflex von dem optischen Element aus dem Bearbeitungslaserstrahlengang ausgekoppelt und auf den ortsauflösenden Sensor gelenkt wird, wobei insbesondere zum Umlenken und Auffalten des oder der ausgekoppelten Rückreflexe eine planparallele Platte als Umlenkelement zwischen dem letzten optische Element der Stahlführungsoptik und dem ortsauflösenden Sensor vorgesehen ist, das den oder die Rückreflexe in eine Mehrzahl von Rückreflexen aufteilt und auf den ortsauflösenden Sensor lenkt. Hierdurch lässt sich in bautechnisch kompakter Weise eine Strahlvermessung erreichen, die zur Fokuslagenkorrektur genutzt werden kann.

Dabei ist vorteilhafter Weise vorgesehen, dass die Auswerteschaltung ferner dazu eingerichtet ist, aus dem Ausgangssignal des ortsauflösenden Sensors zumindest zwei Strahldurchmesser im Bereich des Fokus zu ermitteln und aus den ermittelten Strahldurchmessern eine Strahlkaustik im Fokusbereich zu bestimmen, um aus der ermittelten Strahlkaustik die Fokusposition zu bestimmen.

Die Erfindung wird im Folgenden beispielsweise anhand der Zeichnung näher erläutert. Es zeigen:
Figur 1 eine schematische vereinfachte Darstellung eines Laserbearbeitungskopfes mit einer erfindungsgemäßen Vorrichtung zur Überwachung einer Strahlführungsoptik und zur Regelung der Fokuslage bei der Lasermaterialbearbeitung,
Figur 2 eine vereinfachte Darstellung der Strahlführungsoptik eines Laserbearbeitungskopfes mit Sensoren zur Temperaturüberwachung und zur Fokuslagenkontrolle,
Figur 3 eine schematische Darstellung der Strahlführungsoptik nach Figur 2 mit einem Fokuslagensensor gemäß einer anderen Ausgestaltung der Erfindung,
Figur 4 einen Verlauf einer Laserstrahlkaustik im Bereich des Laserfokus,
Figur 5 eine Darstellung der Strahlführungsoptik und des Fokuslagensensors gemäß Figur 3 mit zusätzlichem Leistungssensor, und
Figur 6 eine vereinfachte schematische Darstellung der Strahlführungsoptik in einem Laserbearbeitungskopf mit einem Fokuslagensensor gemäß einer weiteren Ausgestaltung der Erfindung.

In den verschiedenen Figuren der Zeichnung sind einander entsprechende Elemente mit gleichen Bezugszeichen versehen.

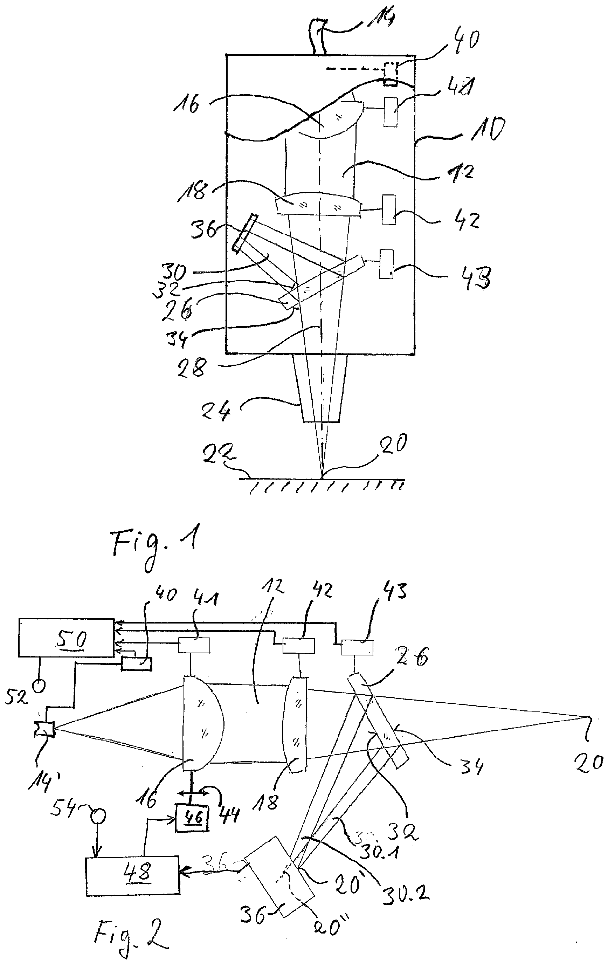

Figur 1 zeigt schematisch einen Laserbearbeitungskopf 10 durch den ein Bearbeitungslaserstrahl 12 geführt ist. Das Bearbeitungslaserlicht wird beispielsweise über eine Lichtleitfaser 14 an den Laserbearbeitungskopf 10 geliefert. Der aus der Lichtleitfaser 14 austretende Bearbeitungslaserstrahl 12 wird von einer ersten Optik 16 kollimiert und von einer Fokussieroptik 18 in einen Laserfokus 20 auf einem Werkstück 22 fokussiert. Zwischen der Fokussieroptik 18 und einer Strahldüse 24, durch die der konvergente Bearbeitungslaserstrahl 12 auf das Werkstück 22 fokussiert wird, ist üblicherweise ein Schutzglas 26 angeordnet, das das Innere des Laserbearbeitungskopfes und insbesondere die Fokussieroptik 18 vor Verschmutzungen schützen soll, die z.B. durch Spritzer oder Schmauch verursacht werden können.

Die erste Optik 16 und Fokussieroptik 18 sind als Einzellinsen dargestellt, können aber auch in bekannter Weise Linsengruppen sein. Insbesondere die erste Optik 16 kann von beweglichen Linsen eines Zoomsystems gebildet sein, die den Bearbeitungslaserstrahl 12 kollimieren.

Um Rückreflexe 30 für eine Fokuslagenkontrolle aus dem Bearbeitungslaserstrahlengang auszukoppeln, ist das Schutzglas 26 so gegenüber der optischen Achse 28 der Strahlführungsoptik geneigt, dass der Winkel zwischen der optischen Achse 28 und den brechenden und reflektierenden Flächen 32, 34 des Schutzglases von 90° verschieden ist. Wie in Figur 1 schematisch dargestellt ist, werden die Rückreflexe 30 auf einen ortsauflösenden Sensor 36 gelenkt. Als ortsauflösender Sensor 36 kann jeder Sensor eingesetzt werden, mit dem ein Durchmesser des auf den Sensor auftreffenden Laserstrahls, also des Laserrückreflexes zur Stahlvermessung ermittelt werden kann. Beispielsweise könnte auch ein Sensor eingesetzt werden, der nach dem sogenannten Knife-Edge-Verfahren arbeitet, bei dem der auf den Sensor auftreffende Lichtstrahl wie bei der Schneidenprüfung schrittweise abgedeckt wird. Zweckmäßigerweise wird jedoch als ortsauflösender Sensor 36 eine Kamera eingesetzt, deren Sensorfläche beispielsweise von einem CCD-Sensor gebildet wird.

Um einen physikalischen Parameter von zumindest einem der optischen Element 16, 18, 26 der Strahlführungsoptik, der mit dem Verschmutzungsgrad des zumindest einen optischen Elements korreliert, wie beispielsweise die Temperatur oder das von dem Element ausgesendete Streulicht, während der Lasermaterialbearbeitung zu messen, sind jedem der optischen Elemente 16, 18, 26 entsprechende Sensoren zu geordnet.

Um beispielsweise die Temperatur des Faserendes 14' der Lichtleitfaser 14 und der einzelnen optischen Elemente der Strahlführungsoptik, also die Temperatur der ersten Optik 16, der Fokussieroptik 18 und des Schutzglases 26 für eine Erkennung einer thermischen Linse und einer Verschmutzung erfassen zu können, ist jedem dieser Elemente ein Temperatursensor 40, 41, 42 und 43 zugeordnet. Als Temperatursensor 40, 41, 42, 43 kann dabei ein Thermofühler oder ein Thermoelement eingesetzt werden, das mit dem Rand oder einer nicht dargestellten Fassung des jeweiligen optischen Elements in Eingriff steht. Es ist aber auch möglich, berührungslos messende Temperatursensoren wie Strahlungsthermometer, Thermopiles, oder dergleichen einzusetzen. Ferner können auch Streulichtsensoren eingesetzt werden, die eine vergleichbare Information wie die Temperatursensoren liefern. Die Signale von Streulichtsensoren sind umso höher je größer die Leistung oder der Verschmutzungsgrad ist. Ideal ist eine Kombination von Temperatur- und Streulichtmessung.

Zur Einstellung einer Fokuslage und zur Fokuslagenkorrektur ist zumindest eines der abbildenden optischen Element der Stahlführungsoptik, also im dargestellten Beispiel die erste Optik 16 und/oder die Fokussieroptik 18 in Richtung ihrer optischen Achse beweglich angeordnet, so dass sie von einem geeigneten Stellantrieb 46 bewegt werden können. Wie in den Figuren 2, 3 und 5 durch den Doppelpfeil 44 angedeutet, wird vorzugsweise die erste Optik 16 durch den Stellantrieb 46 bewegt, um eine Fokuslagenkorrektur durchzuführen. Um aufgrund einer erfassten Fokuslagenverschiebung zur Fokuslagenkorrektur zu steuern, wird ein Ausgangssignal des ortsauflösenden Sensors 36 an eine Auswerteschaltung 48 geliefert, die aus dem Ausgangssignal des ortsauflösenden Sensors 36 die aktuelle Fokusposition oder -lage bestimmt und ein Stellsignal für den Stellantrieb 46 ausgibt, so dass im dargestellten Beispiel die erste Optik 16 entsprechend verschoben wird.

Um die von einzelnen Temperatursensoren 41, 42, 43 gemessenen Temperaturwerte für eine Überwachung der Strahlführungsoptik nutzen zu können, werden diese an eine Temperaturüberwachungsschaltung 50 geliefert, die die gemessenen Temperaturwerte der einzelnen optischen Elemente der Strahlführungsoptik miteinander und jeweils auch mit einem zugeordneten kritischen Temperaturwert vergleicht und z. B. über einen Ausgang 52 ein Warn- oder ein Fehlersignal ausgibt, wenn ein Temperaturwert eines optischen Elements der Strahlführungsoptik einen markanten Temperaturanstieg anzeigt bzw. den zugeordneten kritischen Temperaturwert erreicht. Das Fehlersignal kann - wie unten näher beschrieben - genutzt werden, um die Lasermaterialbearbeitung für dann notwendig werdende Wartungsmaßnahmen zu unterbrechen. Das Fehlersignal vom Ausgang 52 kann auch über einen Eingang 54 der Auswerteschaltung zugeführt werden, um eine weitere Fokuslagenregelung zu stoppen. Andere physikalische Parameter, die mit der Verschmutzung korrelieren, wie z. B. Streulicht, können in entsprechender Weise genutzt werden, wie die hier und im Folgenden zur Veranschaulichung der Erfindung in einem bevorzugten Ausführungsbeispiel beschriebene Temperatur.

Wie besonders gut in Figur 2 zu erkennen ist, wird zur Stahlvermessung ein Laserrückreflex 30.1 von der letzten transparenten optischen Fläche 34 des Schutzglases 26 vor dem Laserprozess, also von der der Wechselwirkungszone gegenüberliegende Fläche 34 auf den ortsauflösenden Sensor 36 gerichtet.

Der ortsauflösende Sensor 36 ist dabei so außerhalb der optischen Achse des Bearbeitungslaserstrahls 12 positioniert, dass der Fokus 20' des Rückreflexes 30.1 auf der Sensorfläche liegt.

Ein zweiter Rückreflex 30.2 von der der Fokussieroptik 18 zugewandten Fläche 32 des Schutzglases 26 wird ebenfalls auf den ortsauflösenden Sensor 36 gelenkt, wobei jedoch der Fokus 20" des zweiten Rückreflexes 30.2 hinter der Sensorfläche liegt, die in Figur 2 gestrichelt angedeutet ist. Um die Auftreffbereiche der beiden Rückreflexe 30 auf der Sensorfläche des ortsauflösenden Sensor 36 weiter von einander zu trennen, kann ein planes optisches Element, also beispielsweise ein Schutzglas mit größerer Dicke verwendet werden.

Während der Lasermaterialbearbeitung wird also eine Fokuslagenregelung zur Kompensation eines sogenannten Fokusshifts, also einer Verschiebung des Fokus entlang der optischen Achse 28 des Bearbeitungslaserstrahlengangs mit Hilfe des ortsauflösenden Sensors 36, also beispielsweise mit Hilfe einer Kamera, deren Ausgangssignal, also deren Bilddaten von der Auswerteschaltung genutzt werden, um den Strahldurchmesser der Rückreflexe im Bereich des Fokus zu bestimmen und um daraus ein Stellsignal für den Stellantrieb 46 zur Fokuslagenkorrektur zu liefern.

Gleichzeitig werden bei der Lasermaterialbearbeitung mit Hilfe der Temperatursensoren 41, 42, 43 die Temperaturwerte der einzelnen optischen Elemente der Stahlführungsoptik ermittelt, so dass die gemessenen Temperaturwerte mit der ermittelten Fokuslage verglichen werden können. Wird bei der Lasermaterialbearbeitung die Laserleistung erhöht, werden alle Temperatursensoren 41, 42, 43 einen Anstieg der Temperatur der zugeordneten optischen Elemente, also der ersten Optik 16, der Fokussierlinse 18 und des Schutzglases 26 messen. Ein Vergleich dieser Temperaturwerte unter einander und/oder mit für die jeweiligen optischen Elemente charakteristischen Temperaturwerten, die bei der erfolgten Laserleistungsänderung zu erwarten sind, kann festgestellt werden, ob der Anstieg der Temperatur der einzelnen optischen Elemente nur auf die Erhöhung der Laserleistung zurückgeht oder auch verschmutzungsbedingt ist. Somit wird der mittels des ortsauflösenden Sensors 36 (zum Beispiel einer Kamera) und der Auswerteschaltung 48 ermittelte Fokusshift durch eine entsprechende Verschiebung der ersten Optik 16 (oder einer anderen Optik) kompensiert, solange keine oder nur eine geringe Verschmutzung vorliegt.

Wenn eine Verschmutzung eines optischen Elements, beispielsweise des Schutzglases 26 vorliegt, so wird für das Schutzglas 26 vom Temperatursensor 43 ein markanter Temperaturanstieg gemessen. Durch einen Vergleich mit den anderen Temperaturwerten und/oder einem dem Schutzglas 26 zugeordneten charakteristischen Temperaturwert für die erfolgte Erhöhung der Laserleistung kann erkannt werden, dass die Temperaturerhöhung des Schutzglases 26 nicht nur auf den Leistungsanstieg im Bearbeitungslaserstrahl 12, sondern auch durch die Verschmutzung hervorgerufen ist. Die Temperaturüberwachungsschaltung 50 kann dann eine Warnung ausgeben, die von einem Bediener oder einer automatischen Maschinensteuerung erkannt wird, um später zu einem geeigneten Zeitpunkt Wartungsmaßnahmen durchzuführen. Der vom ortsauflösenden Sensor 36 gemessene Fokusshift wird durch Verschiebung der entsprechenden Optik, also im dargestellten Beispiel der ersten Optik 16 kompensiert, da die Lasermaterialbearbeitung nicht unterbrochen wird.

Erreicht die Temperatur des als verschmutzt erkannten optischen Elements eine zugeordnete kritische Temperatur dann wird durch den Vergleich mit den anderen Temperaturwerten ein "Fehler" in der Stahlführungsoptik erkannt. In diesem Fall wird der gemessene Fokusshift nicht kompensiert, sondern es wird eine Warnung ausgegeben beispielsweise einen Hinweis darauf, dass "Wartung notwendig" ist. Gleichzeitig erfolgt eine Abschaltung der Laserbearbeitung, um eine Zerstörung des verschmutzten optischen Elements zu verhindern.

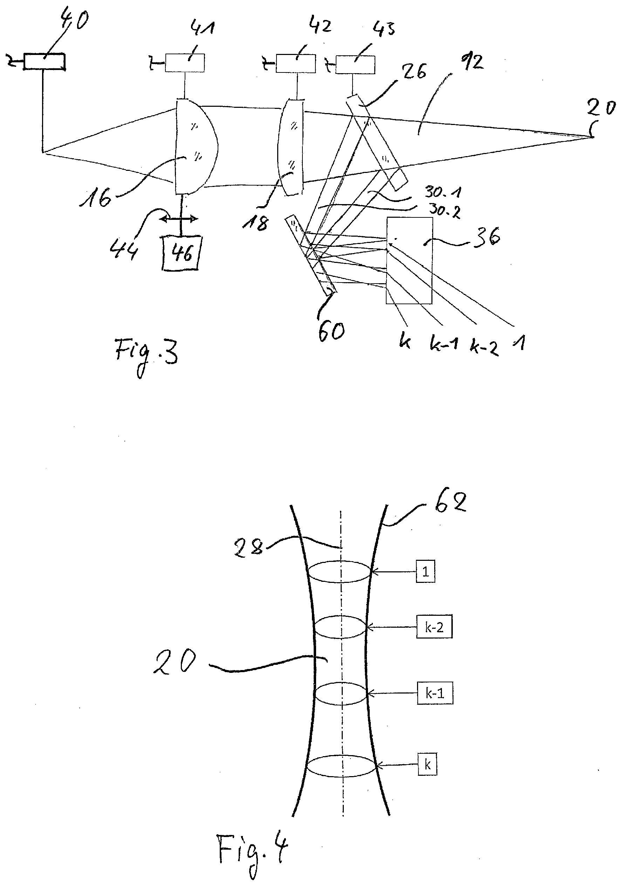

Wie in Figur 3 dargestellt ist, werden idealerweise die beiden Rückreflexe 30.1, 30.2 von dem letzten optischen Element der Stahlführungsoptik vor dem Laserprozess also von dem Schutzglas 26 mit einem weiteren transparenten optischen Element, einem Umlenkelement 60 umgelenkt. Als Umlenkelement 60 kann eine planparallele Platte vorgesehen sein. Es ist aber auch möglich eine Keilplatte als Umlenkelement 60, Schutzglas 26 oder als weiteres Umlenkelement zu verwenden, um die Auftreffpunkte oder -bereiche der einzelnen Teilrückreflexe auf dem ortsauflösenden Sensor 36 also auf dessen Sensorfläche weiter von einander zu trennen. Ferner ist möglich, die hintere Fläche des Umlenkelements 60 zu verspiegeln, um Lichtverluste für die entsprechenden Rückreflexe zu vermeiden. Dabei ist es auch denkbar, die vordere Fläche des Umlenkelements 60 mit einer Beschichtung zu versehen, so dass die Intensität der beiden einfallenden Rückreflexe 30.1 und 30.2 gleichmäßig auf die jeweiligen Teilrückreflexe verteilt wird. Wird als Schutzglas 26 eine Keilplatte verwendet, so ist das Schutzglas 26 nicht unbedingt geneigt einzubauen.

Durch die auf diese Weise erzeugten mehrfach Rückreflexe lässt sich der Strahldurchmesser im Bereich des Fokus an mehreren Stellen vermessen, da der optische Weg des Lichts von letzten Fläche der Fokussieroptik 18 bis zur Sensorfläche des ortsauflösenden Sensors 36 für jeden der Rückreflexe unterschiedlich ist, also teilweise kürzer und teilweise länger als die nominale Brennweite, die die Fokuslage bestimmt. Wie in Figur 3 dargestellt ist, treffen die vier Rückreflexe, die aus den beiden Rückreflexen 30 vom Schutzglas 26 durch die mehrfach Reflektion an den Umlenkelement 60 entstehen, an den Stellen 1, k-2, k-1 und k auf. Die von dem ortauflösenden Sensor 36 an diesen Bereichen seiner Sensorfläche ermittelten Stahldurchmesser sind in Figur 4 schematisch dargestellt. Es zeigt sich also, dass an den Bereichen 1 und k-2 Strahldurchmesser erfasst werden, die vor dem Fokus 20 liegen während in den Bereichen k-1 und k Stahldurchmesser an Stellen erfasst werden, die hinter dem Fokus 20 liegen. Durch die Vermessung mehrerer Stahldurchmesser entlang der Strahlausbreitungsrichtung im Bereich des nominellen Fokus 20 ist es möglich, die Stahlkaustik 62 näherungsweise zu ermitteln, um dann aus der Stahlkaustik 62 die reale Fokuslage des Bearbeitungslaserstrahls 12 zu bestimmen.

Um die Vielzahl von Rückreflexen, die von dem Umlenkelement 60 ausgehen, weiter zu erhöhen, kann das Umlenkelement 60 mehrere gestapelte Planplatten aufweisen. Dabei können die einzelnen Flächen der gestapelten Planplatten so beschichtet sein, dass die Intensität der aus dem Laserbearbeitungsstrahlengang ausgekoppelten Rückreflexe 30.1, 30.2 gleichmäßig auf die Vielzahl der Teilrückreflexe verteilt wird.

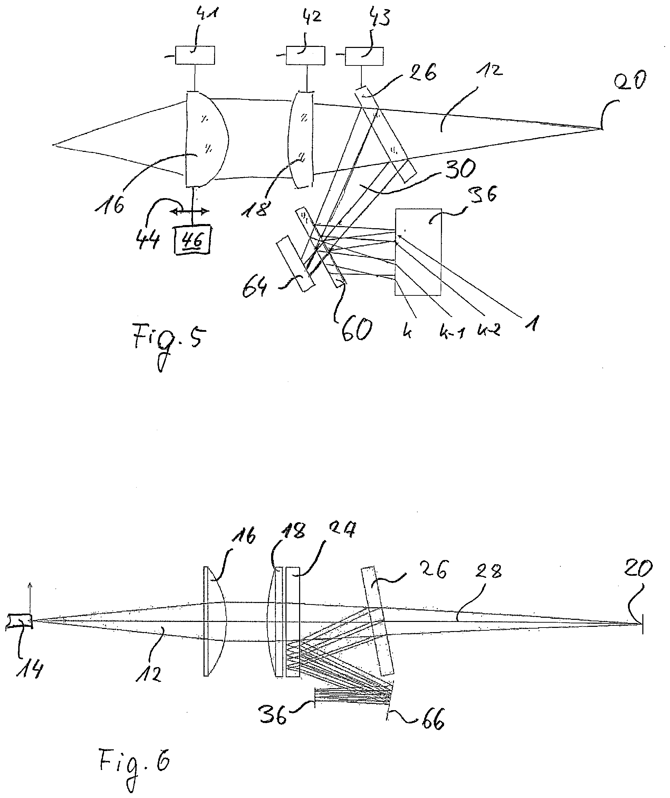

Wie anhand von Figur 5 dargestellt ist, kann bei geeigneter Auslegung des Umlenkelements 60, also bei einem Einsatz eines transparenten Umlenkelements 60, der durch das Umlenkelement 60 hindurchtretende Anteil der beiden Rückreflexe 30 einem Sensor zur Messung der Leistung des Bearbeitungslaserstrahls 12 also einem Leistungssensor 64 zugeführt werden. Das von dem Leistungssensor 64 zur Leistungsmessung gelieferte Leistungssignal, dessen zeitlicher Verlauf eine Zunahme der Laserleistung, eine Abnahme der Laserleistung oder eine konstante Laserleistung bei der Lasermaterialbearbeitung zeigt, kann dann bei einem Vergleich der gemessenen Temperaturwerte der einzelnen optischen Elemente der Strahlführungsoptik benutzt werden, um Temperaturanstiege eindeutig einem Laserleistungsanstieg zuzuordnen und um Verschmutzungen von einzelnen optischen Elementen der Strahlführungsoptik sicher erkennen zu können. Insbesondere zeigt eine Korrelation zwischen dem Leistungsverlauf des Bearbeitungslaserstrahls 12 und Temperaturverlauf eines optischen Elements an, dass keine Verschmutzung vorliegt, während ein nicht mit dem Leistungsverlauf des Bearbeitungslaserstrahls 12 korrelierter Temperaturverlauf eines optischen Elements auf eine gegebenenfalls strake Verschmutzung hinweist. Die Leistungsmessung ermöglicht aber nicht nur eine Doppelkontrolle des Temperaturverlaufs, sondern auch eine Doppelkontrolle der Fokuslage, da für den Fall, dass alle Optiken "sauber" sind, Soll-Werte für die Fokuslage in Abhängigkeit von der Laserleistung ermittelt werden können, die dann mit der bei einer bestimmten Laserleistung gemessenen Ist-Fokuslage verglichen werden können. Bei einer bestimmten Laserleistung geben also Abweichungen von den Soll-Temperaturwerten und von der Soll-Fokuslage einen Hinweis auf Verschmutzungsprobleme.

Figur 6 zeigt eine Strahlführungsoptik für einen Laserbearbeitungskopf, die zusätzlich zu der ersten Optik 16 zum Kollimieren des über die Lichtleitfaser 14 gelieferten Bearbeitungslaserstrahls, der Fokussieroptik 18 und dem Schutzglas 26 ein weiteres Schutzglas 27 aufweist, das dicht hinter der Fokussieroptik 18 angeordnet und senkrecht zur optischen Achse 28 ausgerichtet ist. Das weitere Schutzglas 27 dient hier als Umlenkelement, das die beiden Rückreflexe vom letzten Schutzglas 26 in vier Rückreflexe aufteilt, die dann von einem Spiegel 66 auf den ortsauflösenden Sensor 36 gelenkt werden. Je nach Größe der Sensorfläche des ortauflösenden Sensors 36 können dann alle oder auch nur einige der Rückreflexe für die Strahlvermessung im Bereich des Fokus genutzt werden.

## Patentansprüche

1. Verfahren zur Überwachung einer Strahlführungsoptik in einem Laserbearbeitungskopf (10) bei der Lasermaterialbearbeitung, bei dem
- ein physikalischer Parameter von zumindest einem optischen Element (16, 18, 26) der Strahlführungsoptik, der mit dem Verschmutzungsgrad des zumindest einen optischen Elements korreliert, während der Lasermaterialbearbeitung gemessen wird,
- die Fokusposition zur Fokuslagenregelung erfasst wird,
- eine gemessene Fokuslagenänderung kompensiert wird, solange der gemessene Wert des physikalischen Parameters des zumindest einen optischen Elements (16, 18, 26) der Strahlführungsoptik einen zugeordneten kritischen Wert noch nicht erreicht hat, und
- wenn der gemessene Parameterwert des zumindest einen optischen Elements (16; 18; 26) der Strahlführungsoptik den zugeordneten kritischen Wert erreicht, ein Fehlersignal ausgegeben wird,
**dadurch gekennzeichnet, dass** der physikalische Parameter des zumindest einen optischen Elements (16, 18, 26) dessen Temperatur ist, und dass die Temperatur von zumindest zwei optischen Elementen (16, 18, 26) gemessen wird, und dass die gemessenen Temperaturwerte der einzelnen optischen Elemente (16, 18, 26) der Strahlführungsoptik ferner mit einander verglichen werden, um eine Verschmutzung eines optischen Elements durch einen gegenüber den Temperaturanstiegen der anderen optischen Elemente markanten Temperaturanstieg zu erkennen.

2. Verfahren nach Anspruch 1, **dadurch gekennzeichnet, dass** die Leistung eines Bearbeitungslaserstrahls (12) gemessen und ein daraus ermittelter Leistungsverlauf mit einem Temperaturverlauf des zumindest einen optischen Elements (16, 18, 26) verglichen wird, um eine Verschmutzung zu erkennen.

3. Verfahren nach einem der vorstehenden Ansprüche, **dadurch gekennzeichnet, dass** zur Erfassung der Fokusposition ein Rückreflex (30) von einem im zum Fokus (20) hin konvergierenden Bearbeitungslaserstrahl (12) angeordneten optischen Element (16, 18, 26) aus dem Bearbeitungslaserstrahlengang ausgekoppelt wird, um zumindest einen Strahldurchmesser im Bereich des Fokus (20) zu vermessen und um aus dem oder den Strahldurchmessern die Fokusposition zu bestimmen.

4. Verfahren nach Anspruch 3, **dadurch gekennzeichnet, dass** aus zumindest zwei gemessenen Strahldurchmessem eine Strahlkaustik (62) im Fokusbereich ermittelt wird, um aus der ermittelten Strahlkaustik (62) die Fokusposition zu bestimmen.

5. Vorrichtung zur Überwachung einer Strahlführungsoptik in einem Laserbearbeitungskopf (10) bei der Lasermaterialbearbeitung, mit
- zumindest einem Sensor (41, 42, 43) zum Messen eines physikalischen Parameters von zumindest einem optischen Element (16, 18, 26) der Strahlführungsoptik, der mit dem Verschmutzungsgrad des zumindest einen optischen Elements korreliert, während der Lasermaterialbearbeitung,
- einem Sensor (36) zur Vermessung eines Bearbeitungslaserstrahls (12) im Bereich des Fokus (20) zur Erfassung der aktuellen Fokusposition,
- einer Auswerteschaltung (48), der ein Ausgangssignal des Sensors (36) zuführbar ist und die eingerichtet ist, aus dem Ausgangssignal des Sensors (36) die aktuelle Fokusposition zu bestimmen und ein Stellsignal für einen Stellantrieb auszugeben, der geeignet ist, zur Fokuslagenregelung zumindest ein optisches Element (16, 18, 26) der Strahlführungsoptik zu verschieben, und
- einer Überwachungsschaltung (50), die eingerichtet ist, den gemessenen Parameterwert des zumindest einen optischen Elements (16, 18, 26) der Strahlführungsoptik jeweils mit einem zugeordneten kritischen Wert zu vergleichen und ein Fehlersignal auszugeben, wenn ein Parameterwert des zumindest einen optischen Elements (16, 18, 26) der Strahlführungsoptik den zugeordneten kritischen Wert erreicht,
**dadurch gekennzeichnet, dass** der zumindest eine Sensor zum Messen eines physikalischen Parameters des zumindest einen optischen Elements (16, 18, 26) ein Temperatursensor (41, 42, 43) ist,
**dadurch gekennzeichnet, dass** die Überwachungsschaltung (50) ferner eingerichtet ist, die gemessenen Temperaturwerte von zumindest zwei optischen Elementen (16, 18, 26) der Strahlführungsoptik mit einander zu vergleichen, um eine Verschmutzung eines optischen Elements (16, 18, 26) durch einen gegenüber den Temperaturanstiegen der anderen optischen Elemente markanten Temperaturanstieg zu erkennen.

6. Vorrichtung nach Anspruch 5, **dadurch gekennzeichnet, dass** als Temperatursensoren (41, 42, 43) Thermofühler, Thermoelemente oder berührungslos messende Temperatursensoren wie Strahlungsthermometer, Thermopiles oder dergleichen vorgesehen sind.

7. Vorrichtung nach Anspruch 5 oder 6, **dadurch gekennzeichnet, dass** zur Messung der Leistung des Bearbeitungslaserstrahls (12) ein Leistungssensor (64) vorgesehen ist, und dass die Überwachungsschaltung (50) ferner eingerichtet ist, einen aus der gemessenen Leistung ermittelter Leistungsverlauf mit einem Temperaturverlauf des zumindest einen optischen Elements (16, 18, 26) zu vergleichen, um eine Verschmutzung zu erkennen.

8. Vorrichtung nach einem der Ansprüche 5 bis 7, **dadurch gekennzeichnet, dass** der Sensor zur Vermessung des Bearbeitungslaserstrahls (12) ein ortsauflösender Sensor (36) ist.

9. Vorrichtung nach Anspruch 8, **dadurch gekennzeichnet, dass** ein im zum Fokus (20) hin konvergierenden Bearbeitungslaserstrahl (12) angeordnetes optisches Element (26), insbesondere das letzte optische Element der Strahlführungsoptik so gegen die optische Achse (28) des Bearbeitungslaserstrahlengangs geneigt ist, dass ein Rückreflex von dem optischen Element (26) aus dem Bearbeitungslaserstrahlengang ausgekoppelt und auf den ortsauflösenden Sensor (36) gelenkt wird.

10. Vorrichtung nach Anspruch 9, **dadurch gekennzeichnet, dass** zum Umlenken und Auffalten des oder der ausgekoppelten Rückreflexe eine planparallele Platte als Umlenkelement (60) zwischen dem letzten optische Element der Strahlführungsoptik und dem ortsauflösenden Sensor (36) vorgesehen ist, das den oder die Rückreflexe in eine Mehrzahl von Rückreflexen aufteilt und auf den ortsauflösenden Sensor (36) lenkt.

11. Vorrichtung nach Anspruch 10, **dadurch gekennzeichnet, dass** die Auswerteschaltung (48) ferner dazu eingerichtet ist, aus dem Ausgangssignal des ortsauflösenden Sensors (36) zumindest zwei Strahldurchmesser im Bereich des Fokus zu ermitteln und aus den ermittelten Strahldurchmessern eine Strahlkaustik (62) im Fokusbereich zu bestimmen, um aus der ermittelten Strahlkaustik (62) die Fokusposition zu bestimmen.

## Claims

1. A method for monitoring a beam guiding optics in a laser machining head (10) during laser material machining, wherein
- a physical parameter of at least one optical element (16, 18, 26) of the beam guiding optics that correlates with the degree of soiling of the at least one optical element, is measured during laser material machining,
- the focal position is detected for focal position control,
- the measured focal position is compensated for as long as the measured value of the physical parameter of the at least one optical element (16, 18, 26) of the beam guiding optics has not yet reached an associated critical value, and
- an error signal is output when the measured parameter value of the at least one optical element (16; 18; 26) of the beam guiding optics reaches the associated critical value,
**characterized in that** the physical parameter of the at least one optical element (16, 18, 26) is the temperature thereof, and that the temperature of at least two optical elements (16, 18, 26) is measured, and that the measured temperature values of the individual optical elements (16, 18, 26) of the beam guiding optics are further compared with each other in order to detect soiling of an optical element by a temperature increase that is markedly higher than the temperature increases of the other optical elements.

2. The method according to claim 1, **characterized in that** the power of a machining laser beam (12) is measured and a power profile determined therefrom is compared with a temperature profile of the at least one optical element (16, 18, 26) in order to detect soiling.

3. The method according to one of the preceding claims, **characterized in that**, for detecting the focal position, a back reflection (30) is coupled out of the machining laser beam path by an optical element (16, 18, 26) arranged in the machining laser beam (12) converging toward the focus (20) in order to measure at least one beam diameter in the region of the focus (20) and to determine the focal position from the at least one beam diameter.

4. The method according to claim 3, **characterized in that** a beam caustic (62) in the focus region is determined from at least two measured beam diameters in order to determine the focal position from the determined beam caustic (62).

5. A device for monitoring a beam guiding optics in a laser machining head (10) during laser material machining, comprising
- at least one sensor (41, 42, 43) for measuring a physical parameter of at least one optical element (16, 18, 26) of the beam guiding optics during the laser material machining, said parameter correlating with the degree of soiling of the at least one optical element,
- a sensor (36) for measuring a machining laser beam (12) in the region of the focus (20) for detecting the current focal position,
- an evaluation circuit (48) suppliable with an output signal of the sensor (36) and configured to determine the current focal position from the output signal of the sensor (36) and output a control signal for an actuator configured to displace at least one optical element (16, 18, 26) of the beam guiding optics for focal position control, and
- a monitoring circuit (50) configured to compare the measured parameter value of the at least one optical element (16, 18, 26) of the beam guiding optics with an associated critical value, respectively, and to output an error signal when a parameter value of the at least one optical element (16, 18, 26) of the beam guiding optics reaches the associated critical value,
**characterized in that** the at least one sensor for measuring a physical parameter of the at least one optical element (16, 18, 26) is a temperature sensor (41, 42, 43),
**characterized in that** the monitoring circuit (50) is further configured to compare the measured temperature values of at least two optical elements (16, 18, 26) of the beam guiding optics with each other in order to detect soiling of an optical element (16, 18, 26) by a temperature increase which is markedly higher than the temperature increases of the other optical elements.

6. The device according to claim 5, **characterized in that** thermo sensors, thermocouples or non-contact temperature sensors such as radiation thermometers, thermopiles or the like are provided as temperature sensors (41, 42, 43).

7. The device according to claim 5 or 6, **characterized in that**, for measuring the power of the machining laser beam (12), a power sensor (64) is provided, and that the monitoring circuit (50) is further configured to compare a power profile determined from the measured power with a temperature profile of the at least one optical element (16, 18, 26) in order to detect soiling.

8. The device according to one of claims 5 to 7, **characterized in that** the sensor for measuring the machining laser beam (12) is a spatially resolving sensor (36).

9. The device according to claim 8, **characterized in that** an optical element (26) arranged in the machining laser beam (12) converging towards the focus (20), in particular the last optical element of the beam guiding optics, is inclined with respect to the optical axis (28) of the machining laser beam path such that a back reflection from the optical element (26) is coupled out of the machining laser beam path and directed to the spatially resolving sensor (36).

10. The device according to claim 9, **characterized in that**, for deflecting and unfolding the one or more back reflections coupled out, a plane-parallel plate is provided as a deflecting element (60) between the last optical element of the beam guiding optics and the spatially resolving sensor (36), said plane-parallel plate dividing the one or more back reflections into a plurality of back reflections and directing them to the spatially resolving sensor (36).

11. The device according to claim 10, **characterized in that** the evaluation circuit (48) is further configured to determine at least two beam diameters in the region of the focus from the output signal of the spatially resolving sensor (36) and to determine a beam caustic (62) in the focus region from the determined beam diameters in order to determine the focal position from the determined beam caustic (62).

## Revendications

1. Procédé pour surveiller une optique de guidage de faisceau dans une tête d'usinage au laser (10) lors de l'usinage d'un matériau au laser, dans lequel
- un paramètre physique d'au moins un élément optique (16, 18, 26) de l'optique de guidage de faisceau, qui établit une corrélation avec le degré d'encrassement du au moins un élément optique, est mesuré pendant l'usinage d'un matériau au laser,
- la position focale est détectée pour la commande de la position focale,
- une variation mesurée de la position focale est compensée, tant que la valeur mesurée du paramètre physique du au moins un élément optique (16, 18, 26) de l'optique de guidage de faisceau n'a pas encore atteint une valeur critique associée, et
- lorsque la valeur mesurée du paramètre du au moins un élément optique (16, 18, 26) de l'optique de guidage de faisceau atteint la valeur critique associée, un signal d'erreur est généré,
**caractérisé en ce que** le paramètre physique du au moins un élément optique (16, 18, 26) est sa température, et **en ce que** la température d'au moins deux éléments optiques (16, 18, 26) est mesurée, et **en ce que** les valeurs de température mesurées des éléments optiques individuels (16, 18, 26) de l'optique de guidage de faisceau sont en outre comparées les unes aux autres afin de détecter un encrassement d'un élément optique par une nette augmentation de température par rapport aux augmentations de température des autres éléments optiques.

2. Procédé selon la revendication 1, **caractérisé en ce que** la puissance d'un faisceau d'usinage au laser (12) est mesurée et un profil de puissance résultant est comparé à un profil de température du au moins un élément optique (16, 18, 26) afin de détecter un encrassement.

3. Procédé selon l'une des revendications précédentes, **caractérisé en ce que** pour détecter la position focale, une réflexion arrière (30) est découplée du trajet de faisceau laser d'usinage par un élément optique (16, 18, 26) agencé dans le faisceau laser d'usinage (12) convergeant vers le foyer (20), afin de mesurer au moins un diamètre de faisceau dans la zone du foyer (20) et de déterminer la position focale à partir du ou des diamètres de faisceau.

4. Procédé selon la revendication 3, **caractérisé en ce qu'**une caustique de faisceau (62) est déterminée dans la zone de foyer à partir d'au moins deux diamètres de faisceau mesurés, afin de déterminer la position focale à partir de la caustique de faisceau (62) déterminée.

5. Dispositif pour surveiller une optique de guidage de faisceau dans une tête d'usinage au laser (10) lors de l'usinage d'un matériau au laser, comportant
- au moins un capteur (41, 42, 43) pour mesurer un paramètre physique d'au moins un élément optique (16, 18, 26) de l'optique de guidage de faisceau, qui est corrélé au degré d'encrassement du au moins un élément optique, pendant l'usinage d'un matériau au laser,
- un capteur (36) pour mesurer un faisceau laser d'usinage (12) dans la zone du foyer (20) afin de déterminer la position focale actuelle,
- un circuit d'évaluation (48) auquel peut être délivré un signal de sortie du capteur (36) et qui est configuré pour déterminer la position focale actuelle à partir du signal de sortie du capteur (36) et pour générer un signal de commande pour un actionneur adapté pour déplacer au moins un élément optique (16, 18, 26) de l'optique de guidage de faisceau pour la commande de position focale, et
- un circuit de surveillance (50) configuré pour comparer la valeur de paramètre mesurée du au moins un élément optique (16, 18, 26) de l'optique de guidage de faisceau respectivement à une valeur critique associée, et pour générer un signal d'erreur lorsqu'une valeur de paramètre du au moins un élément optique (16, 18, 26) de l'optique de guidage de faisceau atteint la valeur critique associée,
**caractérisé en ce que** le au moins un capteur est un capteur de température (41, 42, 43) destiné à mesurer un paramètre physique du au moins un élément optique (16, 18, 26),
**caractérisé en ce que** le circuit de surveillance (50) est en outre configuré pour comparer les valeurs de température mesurées d'au moins deux éléments optiques (16, 18, 26) de l'optique de guidage de faisceau les unes aux autres, afin de détecter un encrassement d'un élément optique (16, 18, 26) par une nette augmentation de température par rapport aux augmentations de température des autres éléments optiques.

6. Dispositif selon la revendication 5, **caractérisé en ce que** des sondes thermiques, des thermocouples ou des capteurs de température sans contact tels que des thermomètres à rayonnement, des thermopiles ou analogues, sont prévus en tant que capteurs de température (41, 42, 43).

7. Dispositif selon la revendication 5 ou 6, **caractérisé en ce qu'**un capteur de puissance (64) est prévu pour mesurer la puissance du faisceau laser d'usinage (12), et **en ce que** le circuit de surveillance (50) est en outre configuré pour comparer un profil de puissance déterminé à partir de la puissance mesurée avec un profil de température du au moins un élément optique (16, 18, 26), afin de détecter un encrassement.

8. Dispositif selon l'une des revendications 5 à 7, **caractérisé en ce que** le capteur destiné à mesurer le faisceau laser d'usinage (12) est un capteur à résolution spatiale (36).

9. Dispositif selon la revendication 8, **caractérisé en ce qu'**un élément optique (6) agencé dans le faisceau laser d'usinage (12) convergeant vers le foyer (20), en particulier le dernier élément optique de l'optique de guidage de faisceau, est incliné par rapport à l'axe optique (28) du trajet de faisceau laser d'usinage, de sorte qu'une réflexion arrière est découplée du trajet de faisceau laser d'usinage par l'élément optique (26) et est dirigée vers le capteur à résolution spatiale (36).

10. Dispositif selon la revendication 9, **caractérisé en ce que** pour faire dévier et déplier la ou les réflexions arrière découplées, une plaque parallélépipédique est prévue en tant qu'élément de déviation (60) entre le dernier élément optique de l'optique de guidage de faisceau et le capteur à résolution spatiale (36), lequel élément de déviation divise la ou les réflexions arrière en une pluralité de réflexions arrière et les dirige vers le capteur à résolution spatiale (36).

11. Dispositif selon la revendication 10, **caractérisé en ce que** le circuit d'évaluation (48) est en outre configuré pour déterminer au moins deux diamètre de faisceau dans la zone du foyer à partir du signal de sortie du capteur à résolution spatiale (36), et pour déterminer une caustique de faisceau (62) dans la zone de foyer à partir des diamètres de faisceau déterminés, afin de déterminer la position focale à partir de la caustique de faisceau (62) déterminée.
